Europäisches Patentamt

European Patent Office

Office européen des brevets

(11) Veröffentlichungsnummer: **0 229 233**
**A2**

## (12) EUROPÄISCHE PATENTANMELDUNG

(21) Anmeldenummer: **86114110.9**

(51) Int. Cl.⁴: **B01D 21/04**

(22) Anmeldetag: **11.10.86**

(30) Priorität: **15.01.86 DE 3600935**

(43) Veröffentlichungstag der Anmeldung:
**22.07.87 Patentblatt 87/30**

(84) Benannte Vertragsstaaten:
**AT BE CH DE ES FR GB GR IT LI LU NL SE**

(71) Anmelder: **Ralf F. Piepho Abwassertechnik GmbH**
**Rittergut 2**
**D-3015 Wennigsen 5(DE)**

(72) Erfinder: **Piepho, Ralf F.**
**Rittergut 2**
**D-3015 Wennigsen 5(DE)**

(74) Vertreter: **Rücker, Wolfgang, Dipl.-Chem.**
**Hubertusstrasse 2**
**D-3000 Hannover 1(DE)**

(54) **Vorrichtung zur Aufbereitung von verbrauchten Emulsionen und Industrieabwässern.**

(57) Beschrieben wird eine Vorrichtung zum Aufbereiten von verbrauchten Emulsionen und Industrieabwässern von rechteckiger, kastenförmiger Gestalt mit einem Reaktionsbehälter, in welchem die aufzubereitende Flüssigkeit mit einem chemischen Gemisch behandelt wird, einem damit in Verbindung stehenden Absetzbehälter, in dem sich der sich bildende Niederschlag von der Flüssigkeit trennt und absetzt, sowie Einrichtungen zum Austragen des Niederschlages aus dem Behälter und Einrichtungen zur Zuteilung des chemischen Gemisches zur aufzubereitenden Flüssigkeit.

FIG.1

EP 0 229 233 A2

## Vorrichtung zur Aufbereitung von verbrauchten Emulsionen und Industrieabwässern

Die Erfindung betrifft eine Vorrichtung zur Aufbereitung von verbrauchten Emulsionen und Industrieabwässern oder dergleichen mit einem Reaktionsbehälter, in welchem die aufzubereitende Flüssigkeit und ein Gemisch aus chemischen Stoffen miteinander in Verbindung gebracht werden, und einem Absetzbehälter, in welchem sich ein sich bildender Niederschlag absetzt, sowie einer Einrichtung, mit welcher der Niederschlag aus dem Absetzbehälter ausgetragen oder abtransportiert wird.

In der deutschen Offenlegungsschrift 31 24 738 ist eine solche Vorrichtung zur Aufbereitung von verbrauchten Emulsionen und Industrieabwässern beschrieben. Bei dieser Vorrichtung wird der Niedreschlag über ein Wabenband, welches über Antriebs-und Umlenkrollen geführt ist, aus dem Absetzbehälter ausgetragen und auf eine schräge Fläche abgeworfen, von der er schließlich einer Mulde in einem Bandfilter zufließt. Dieser Niederschlag, der auf diese Weise aus dem Absetzbehälter abtransportiert wird, enthält noch reichlich Wasser, so daß er auf dieser schrägen Fläche abfließen kann.

Auf dem Bandfilter, welcher ein wasserdurchlässiges Zellstoff-oder Faserstoffgebilde ist, verliert er einen Teil des Wassers, um schließlich auf einer speziellen Vorrichtung mit dem Bandfilter unter Quetschrollen·hindurchzulaufen, die ihn weiter entwässern. Dieser Aufbau der Vorrichtung, der sehr aufwendig ist, führt zu einer recht sperrigen Vorrichtung, die viel Platz benötigt und wegen des Bandfilters und der Preßwalzen auch erhebliche Investitions-und Unterhaltungskosten verursacht.

Außerdem ist eine sich praktisch über den gesamten unteren Bereich erstreckende Sammeleinrichtung für das abfließende Abwasser erforderlich und damit auch getrennte Leitungen zum Abtransport des Abwassers.

Aufgabe der vorliegenden Erfindung ist es nun, eine Vorrichtung der eingangs genannten Art zu - schaffen, die kompakt ist, bei der der Reaktionsbehälter, der Absetzbehälter und sonstige das Abwasser aufnehmenden Teile geschlossen sind, so daß auch bei Schräglagen und Kipp-und Schwingbewegungen keine Flüssigkeit austritt, beispielsweise wenn die Vorrichtung auf Schiffen angebracht ist, und die einen einfachen leicht überschaubaren, wartungsfreundlichen Aufbau zeigt.

Gelöst wird diese Aufgabe erfindungsgemäß dadurch, daß die die Flüssigkeit aufnehmenden Behälter kastenförmige Gestalt haben mit geraden Wänden und daß der Austrag des sich bildenden Niederschlages im Absetzbehälter über ein Wabenband erfolgt, das mit seinen äußeren Oberflächen zwischen sich gegenüberliegenden Seitenwänden und über den Boden gleitet, den Behälter über Schlitze verläßt, die dem Querschnitt des Wabenbandes entsprechen, und dabei über einen Sammelbehälter für den Niederschlag außerhalb der Behälter hinwegläuft.

Das Wabenband entspricht also der Breite des Absetzbehälters in der Vorrichtung und nimmt eine rechteckige Bahn und wird diesem Zweck über drei Führungs-und eine Antriebswalze geleitet, von denen zwei Führungswalzen für das Wabenband in den gegenüberliegenden Ecken von Seitenwänden und Boden liegen, während die eine Führungswalze senkrecht über eine der unteren liegt und die Antriebswalze senkrecht gegenüber der anderen unteren Führungswalze angeordnet ist.

Die kanalartigen Führungen für das Wabenband werden gebildet von den vertikal stehenden Seitenwänden und zusätzlichen Wänden, die parallel zu den Seitenwänden verlaufen und einen Abstand von diesen haben, der um eine geringes größer ist als das Wabenband dick ist. Das Wabenband ist also ein endloses Band und besteht aus zwei horizontalen Trumms, die sich gegenüberliegen und zwei sich ebenfalls gegenüberliegenden vertikalen Trumms.

Es entsteht nun so eine rechteckige Schleife, die soweit über die die Flüssigkeit aufnehmenden Behälter hinausgeführt ist, daß zwischen die vertikalen Trumms des Wabenbandes ein Aufnahmebehälter für den Niederschlag einführbar ist, der den aus dem oberen horizontalen Trumm herausfallenden Niederschlag aufnimmt. Die Entleerung des Wabenbandes im oberen horizontalen Trumm wird durch eine Klopfvorrichtung unterstützt, die rhytmisch gegen die obere horizontale Fläche des Wabenbandes schlägt.

Der Antrieb des Wabenbandes erfolgt über einen Elektromotor mit Regelgetriebe. Die Antriebswalze ist auf ihrem Umfang vorzugsweise mit zwei Zahnkränzen versehen, die in zwei entsprechende Wabenreihen des Wabenbandes eingreifen und das Wabenband in Bewegung setzen.

Das Wabenband bewegt sich entsprechend der Bildung des Niederschlages relativ langsam über den Boden des Absetzbehälters hinweg, so daß der aus der Flüssigkeit ausflockende und sich absetzende Niederschlag in die Waben des Wabenbandes fällt und bei der Bewegung des Wabenbandes von diesem mitgenommen und nach oben gerfördert wird.

Bei der Aufwärtsbewegung des Niederschlages im Wabenband außerhalb des Absetzbehälters entwässert sich der Niederschlag aufgrund der langen Verweilzeit selbstständig soweit, daß eine Pressung und dgl. wie bei der bekannten Anlage nicht erforderlich ist.

Die Vorrichtung ist mit Einlaß-und Auslaßleitungen versehen, über die das zu behandelnde Abwasser eingelassen und das behandelte Abwasser abgelassen werden kann. Auf diese Weise ist mit der Vorrichtung praktisch ein kontinuierlicher Betrieb möglich.

Die aus der Vorrichtung austretende Flüssigkeit ist soweit geklärt, daß sie einem Vorfluter zuführt werden, oder falls es sich um ein Schiff handelt, einem entsprechenden Raum im Doppelboden zugeführt werden kann, der dann bei der nächsten Hafenzeit entleert wird.

Der anfallende Schlamm bzw. Niederschlag kann aus dem Aufnahmebehälter, der die Gestalt einer kippbaren Mulde hat, direkt in deponierfähige Verpackung bzw. Plastiksäcke abgefüllt werden. Anstelle der Kippmulde ist auch eine andere Vorrichtung zum Wegbefördern des aus dem Wabenband herausfallenden Niederschlages denkbar, beispielsweise eine im Querschnitt V-förmige Mulde, wobei die Seitenwände dieser Mulde zu den einander gegenüberliegenden, vertikal stehenden Trumms des Wabenbandes geneigt sind, die in ihrem Grunde kreisförmigen Querschnitt hat, und eine Schnecke enthält, die den Niederschlag in einen Schlauch einspeist, der mit einem Aufnahmebehälter verbunden ist.

Der die Vorrichtung bildende Kasten, der die Reaktions-und Absetzbehälter enthält, ist oben durch eine Platte verschlossen und enthält lediglich jene schlitzförmigen Öffnungen, in die die Führungskanäle des Wabenbandes einmünden, durch die das Wabenband nach oben aus dem Behälter austritt, um auf der gegenüberliegenden Seite, nachdem es einen U-förmigen Weg auf der Oberseite des Behälters zurückgelegt hat, wieder in eine schlitzförmige Öffnung eines entsprechenden Kanals einzutreten.

Der Inhalt des Absetzbehälters ist so nach oben abgedichtet, daß Flüssigkeit bei Schräglage nicht austreten kann.

Die Erfindung wird nun anhand einer Zeichnung, die eine Ausführungsform der Vorrichtung zeigt, näher erläutert.

In der Zeichnung stellen dar:

Fig. 1 eine Seitenansicht der Vorrichtung, teilweise im Schnitt, aus der Richtung des Pfeiles "Fig. 1" in Fig. 6 gesehen,

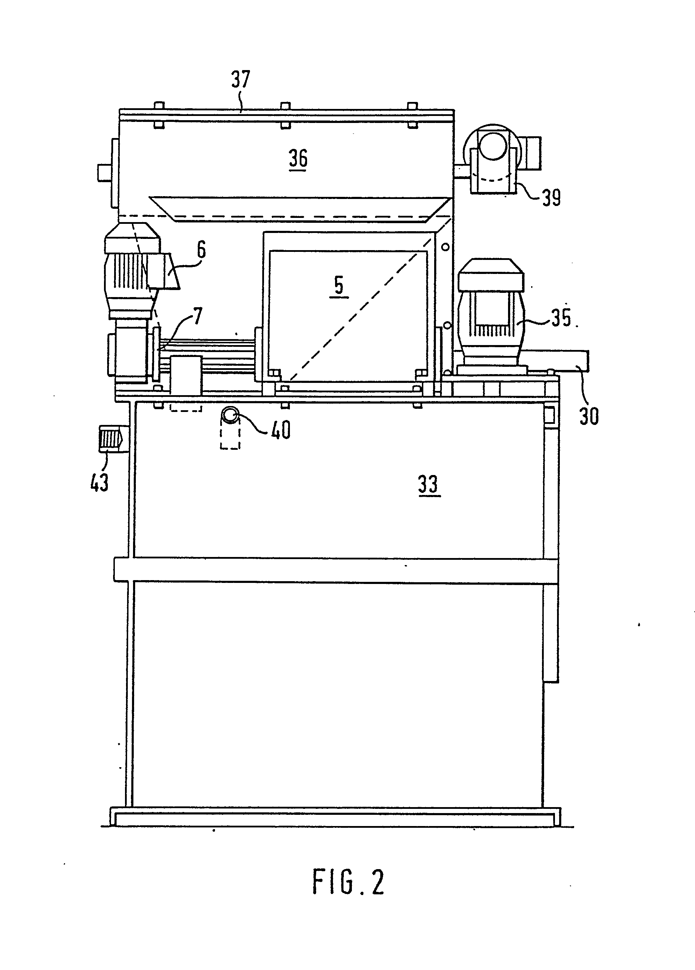

Fig. 2 eine Seitenansicht der Vorrichtung aus der Richtung "Fig. 2" der Fig. 6 gesehen,

Fig. 3 eine Seitenansicht aus Richtung des Pfeiles "Fig. 3" der Fig. 6 gesehen,

Fig. 4 eine Seitenansicht der Vorrichtung in Richtung des Pfeiles "Fig. 4" der Fig. 6 gesehen,

Fig. 5 einen Schnitt auf der Linie V -V der Fig. 6,

Fig. 6 eine Draufsicht auf die Vorrichtung, teilweise im Schnitt, und

Fig. 7 eine Ansicht eines Teiles eines Wabenbandes.

Wie bereits oben ausgeführt, umfaßt die Vorrichtung einen kastenförmigen Teil 1, in welchem die Behälter enthalten sind, in denen die Reaktion zwischen dem Abwasser und dem Trennmittel sich abspielt und den Behälter, in welchem das Reaktionsgemisch verweilt, sich ein Niederschlag ausscheidet und zu Boden fällt.

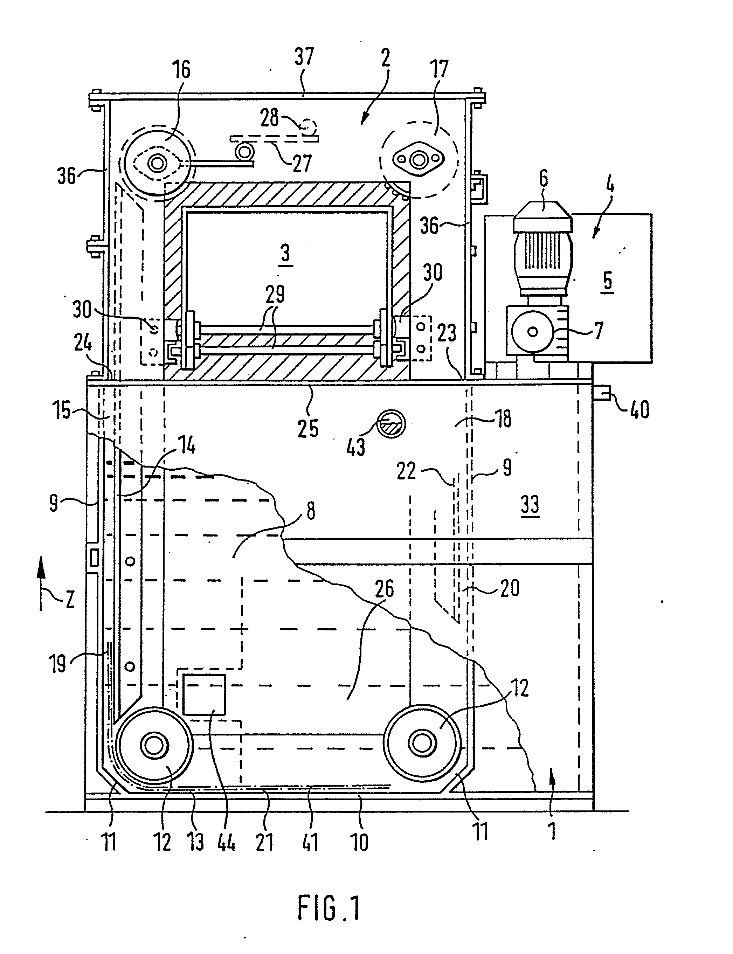

Außerdem umfaßt die Vorrichtung einen brückenartigen Aufbau 2, der oben auf dem Behälter sitzt und unter den ein Auffangbehälter 3 einfahrbar ist. Schließlich ist in Fig. 1 noch eine Dosiereinrichtung 4 dargestellt, die sich aus dem Vorratsbehälter 5 für das Trennmittel und dem Elektromotor 6 mit Getriebe und der Dosierschnecke 7 aufbaut.

Aus Fig. 1 ist ferner deutlich zu ersehen, daß der Absetzbehälter, in welchem die mit Trennmittel versetzte Flüssigkeit 8 enthalten ist, gerade, glatte Seitenwände 9 und auch einen solchen geraden Boden 10 besitzt. In dem Absetzbehälter ist ferner in den Ecken 11, die die Seitenwände 9 mit dem Boden 10 bilden, je eine Führungswalze 12 drehbar angeordnet, um die ein endloses Wabenband 13 verläuft, welches an der rechten Seitenwand in einem zwischen der Seitenwand 9 und einer im Abstand und parallel dazu verlaufenden Wand 14 nach oben führt, wobei der zwischen den Wänden 9 und 14 gebildete Kanal 15 bis in die Nähe einer in dem Brückenaufbau gelegenen Führungswalze 16 führt, wo das Wabenband rechtwinklig umgeleitet wird und nach rechts läuft zur Antriebswalze 17, um schließlich senkrecht nach unten durch einen entsprechenden Führungskanal 18 hindurch zur Führungs-und Umlenkwalze 12 zu gelangen.

Das Wabenband 13 besitzt also zwei vertikal verlaufende Trumms 19 und 20 und zwei horizontal verlaufende Trumms, von denen das zwischen den oberen Walzen 16 und 17 der Übersichtlichkeit halber nicht dargestellt ist.

Das Wabenband beschreibt also, wie aus Fig. 1 deutlich hervorgeht, einen rechteckigen Weg, wobei es mit einem horizontalen Trumm 21 und mit seitlichen Trumms 20 und 21, letztere ebenfalls nicht dargestellt, an den Seitenwänden 9 und dem Boden 10 entlang gleitet.

Diese paarweise angeordneten Seitenwände, nämlich 9, 14 und 9, 22, haben solche Querschnittsabmessungen, daß das Wabenband 13 mit geringem Spiel hindurchlaufen kann, um schließlich oben durch zwei in der Zeichnung nicht dargestellte schlitzförmige Öffnungen etwa bei 23 und 24 durch die Abdeckplatte 25 der Behälter hindurchzutreten, um durch den brückenartigen Aufbau 2 zu laufen.

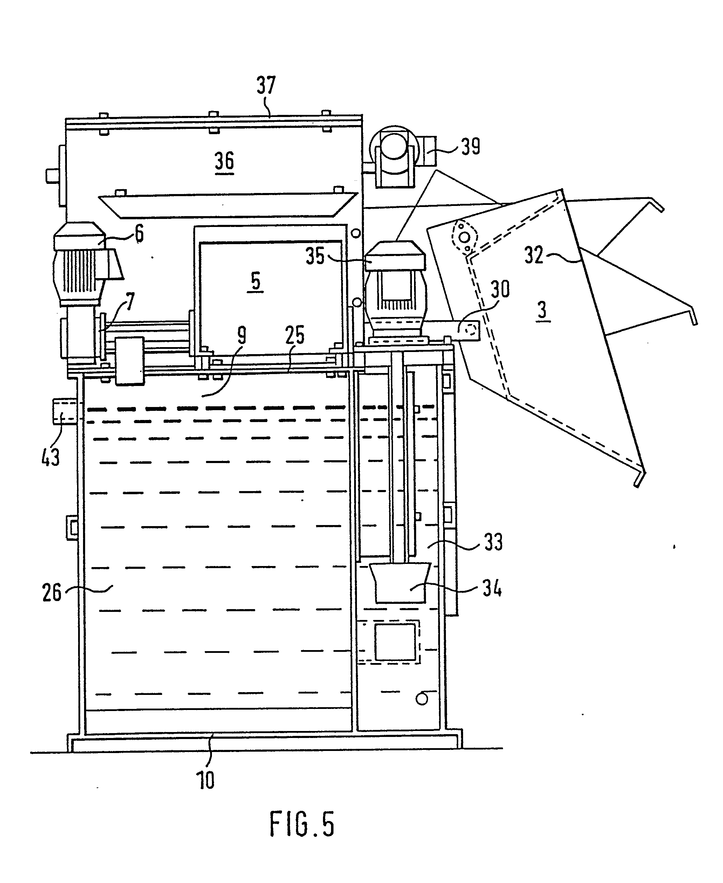

Diese Kanäle 15 und 20 bilden mitsamt dem Wabenband Dichtungen, so daß die Vorrichtung auch Kipp-und Schaukel-und Schwingbewegungen ausführen kann, ohne daß die Flüssigkeit 8 aus dem Reaktionsbehälter (Fig. 5) und Absetzbehälter 26 austritt.

In dem brückenartigen Aufbau 2 ist schließlich eine durch die Führungswalze 16 betätigte Klopfvorrichtung angebracht, die mit einer Stange 28 gegen das Wabenband klopft. Wirkungsweise und Funktion der einzelnen Teile sind weiter unten noch beschrieben.

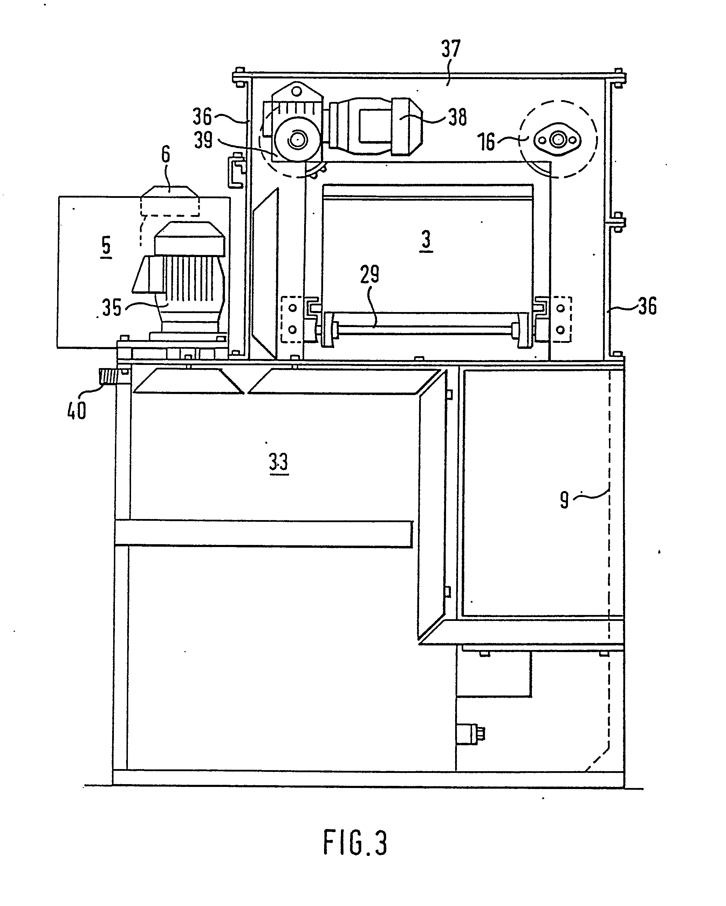

Aus Fig. 1, 3 und 5 ist der Auffangbehälter 3 hinsichtlich seiner Wirkungsweise und Funktion ersichtlich.

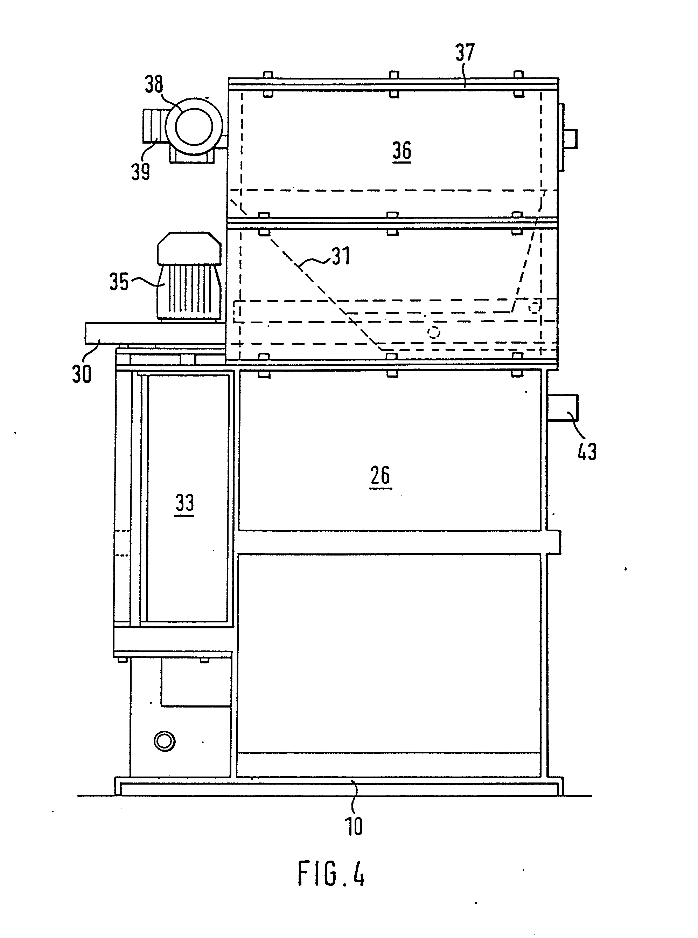

Der Auffangbehälter 3 läuft mit Zapfen von an seinem Gehäuse angebrachten Stangen 29 in Führungsschienen 30, welche in den seitlichen vertikalen Teilen des Brückenaufbaus 2 befestigt sind und kann unter Berücksichtigung von Fig. 5 in dem Brückenaufbau 2 hin und her bewegt werden, derart, daß er einmal, wie in Fig. 4 gestrichelt bei 31 angedeutet, unterhalb des Wabenbandes steht oder wie in Fig. 5 bei 32 gezeigt, eine abgekippte Stellung einnimmt, in der der Auffangbehälter 3 entleerbar ist.

Diese eine Ausgestaltung der Aufnahme und des Abtransports von Sediment oder Niederschlag kann natürlich auch in anderer Weise gelöst sein.

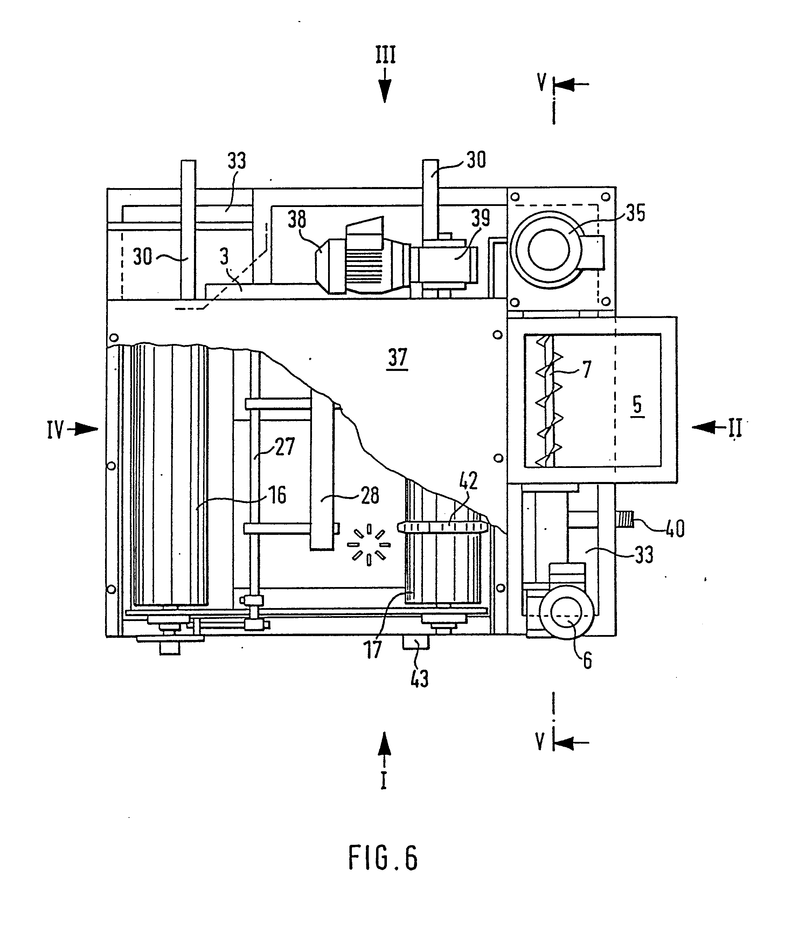

Aus Fig. 5 ist schließlich der Reaktionsbehälter 33 mit der Mischturbine 34, die mit einem Elektromotor 35 angetrieben wird, sowie der Trennmittelvorratsbehälter 5 mit seiner Dosiereinrichtung, bestehend aus Elektromotor 6 und Schnecke 7 erkennbar, die auch in Fig. 6 zu erkennen ist.

Der brückenförmige Aufbau ist, wie aus der Zeichnung ersichtlich, ein aus Blechen hergestelltes Gebilde mit Seitenwänden 36 und Decke 37, an dem die Antriebs-und Führungseinrichtungen für das Wabenband befestigt sind. Der Antrieb des Wabenbandes bzw. der Antriebsrolle 17 erfolgt durch einen Elektromotor 38 mit Regelgetriebe 39, so daß die Umlaufgeschwindigkeit des Wabenbandes bestimmbar ist.

Aus Fig. 6 sind schließlich noch zu erkennen die Führungsschienen 30 für den Auffangbehälter für den sich im Absetzbehälter bildenden Niederschlag.

Die erfindungsgemäße Vorrichtung arbeitet nun wie folgt.

Das zu behandelnde bzw. zu reinigende Industrieabwasser, beispielsweise eine Emulsion von Fetten, Wachsen und Ölen in einem großem Wasservolumen, läuft über den Rohrstutzen 40 in den Reaktionsbehälter 33 und wird in diesem je nach Verschmutzungsgrad mit einer bestimmten Menge eines an sich bekannten Trennmittels, welches in dem Behälter 5 bevorratet ist, über die Schnecke 7, angetrieben von dem Getriebemotor 6, versetzt.

Die von dem Elektromotor 35 angetriebene Mischturbine 34 erzeugt eine turbulente Strömung in dem Abwasser in dem Reaktionsbehälter 33 und dispergiert dadurch das Trennmittel innig in dem Abwasser, so daß es mit den anderen darin enthaltenen emulgierten Stoffen reagieren kann.

Das in dem Reaktionsbehälter eine Zeitlang so behandelte Abwasser fließt dann in den Absetzbehälter 26, in welchem das behandelte Abwasser ebenfalls eine bestimmte Zeitspanne in Ruhe verweilt, so daß die Reaktion zwischen dem Trennmittel und den zu entfernenden Stoffen ablaufen kann, wonach sich ein Niederschlag bildet, der auf den Boden 10 des Absetzbehälters fällt und dabei wie aus Fig. 1 deutlich erkennbar in die einzelnen Waben 41 des Wabenbandes 13.

Das Wabenband bewegt sich beispielsweise in der Vorrichtung unter Berücksichtigung von Fig. 1 in Richtung des Pfeiles Z, so daß der Niederschlag in den Waben 41 des Wabenbandes 13 mitgenommen und über den Auffangbehälter 3 transportiert wird, wo der Niederschlag zufolge der Schwerkraft und gegebenenfalls unter Einwirkung der Klopfvorrichtung 27 in den Auffangbehälter 3 fällt, der sobald er gefüllt ist, wie in Fig. 5 nach rechts herausgezogen, abgekippt und in einen anderen Aufnahmebehälter und -sack oder dgl. abgegeben werden kann.

Da das Wabenband 13 in der Vorrichtung recht langsam umläuft, kann sich der Schlamm bei seiner Aufwärtsbewegung in Richtung des Pfeiles Z, insbesondere sobald er aus dem Wasser im Absetzbehälter 26 ausgetreten ist, entwässern und relativ trocken in den Auffangbehälter 3 abgegeben werden.

Nachdem das Wabenband seinen Inhalt in Form des Niederschlages in den Auffangbehälter 3 abgegeben hat, bewegt es sich unter Berücksichtigung der Fig. 1 nach rechts um die Antriebswalze 7, die mit Verzahnungen auf ihrem Umfang versehen ist, wie bei 42 in Fig. 6 veranschaulicht, und so das Wabenband in Bewegung setzt, durch den Kanal 18 zwischen den Seitenwänden 9 und 22 nach unten, um beim Überqueren der Oberfläche des Bodens 10 sich wieder mit Niederschlag zu füllen. Das geklärte bzw. gereinigte Abwasser fließt über den Rohrstutzen 43 ab.

Da die Vorrichtung insgesamt geschlossen ist, der Ablauf über den Rohrstutzen 40 erfolgt und das Abwasser einen vorgeschriebenen, erzwungenen Weg nehmen muß, von dem Reaktionsbehälter 33, der den Absetzbehälter winkelförmig umgibt, in den Absetzbehälter, durch die Öffnung 44 und über den Rohrstutzen 43 wieder hinaus, kann die Vorrichtung praktisch kontinuierlich betrieben werden.

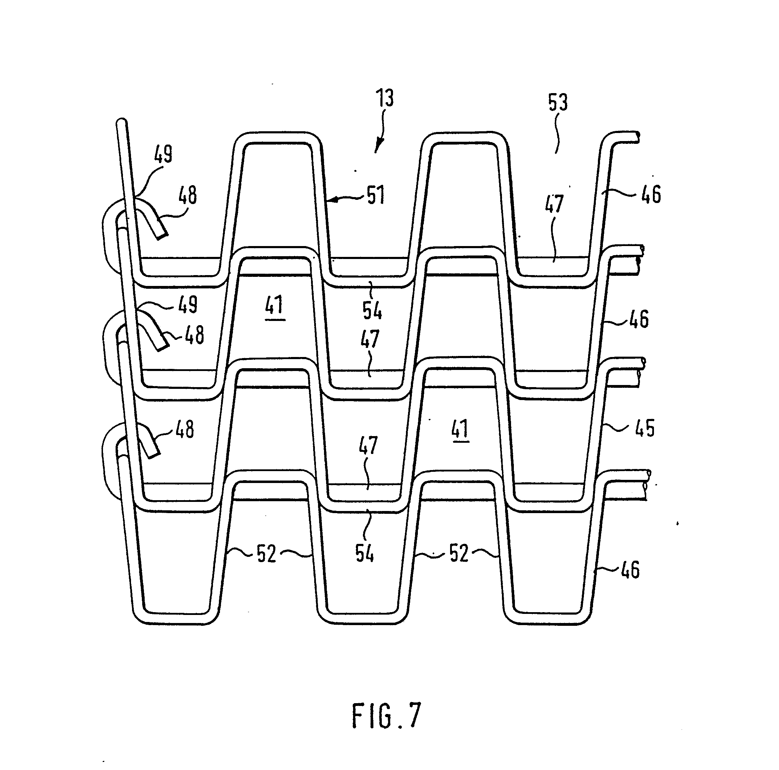

In Fig. 7 ist das Wabenband, welches in der Vorrichtung erfindungsgemäß verwandt wird, zum Teil dargestellt.

Das Wabenband besteht aus mäanderförmig gebogenen Blechstreifen 51, die oberflächenvergütet sein können, um gegen Korrosion geschützt zu sein, und weist Waben auf, deren Seitenwände 52 etwas zur oberen Öffnung 53 hin divergierend verlaufen, so daß die Stege des Wabenbandstreifens 54 in die offenen Enden 53 ein solches Stück hineinragen können, daß einzelne mäanderförmig gebogene Blechstreifen 45 und 46 durch Stäbe 47 miteinander schwenkbar verbunden sein können, wobei die Stäbe an ihren Enden bei 48 durch Umbiegen und Einführen in dafür vorgesehene Bohrungen 49 gesichert sind.

Auf diese Weise entstehen wabenartige Kammern 41 relativ konstanten Volumens, die zusammen mit den Wandflächen Hohlräume bilden, in denen der auszutragende Niederschlag transportiert werden kann.

Aus der obigen Beschreibung und den Zeichnungen zeigt sich die erfindungsgemäße Vorrichtung als kompakte Einheit, die von allen Seiten gut zugänglich ist, insbesondere einen geschlossenen abgedichteten Reaktionsraum und Absetzbehälter für die zu behandelnde Flüssigkeit besitzt und dadurch auch vorteilhaft auf einem Schiff in Betrieb genommen werden kann, beispielsweise zur Aufbereitung von ölhaltigem Bilgenwasser oder sonstigen ölhaltigen Abwässern. Ebenso hat sie auch eine wirkungsvolle Einrichtung zur Entfernung des Niederschlages, der bei der Reinigung zwangsweise entsteht.

Der das Gemisch chemischer Stoffe und Trennmittel aufnehmende Behälter 5 kann durch einen arretierbaren Deckel verschlossen werden, so daß auch hier Vorsorge gegen Auswurf von Trennmittel gegeben ist. Der Vorratsbehälter 5 für das Trennmittel ist so bemessen, daß eine Trennmittelmenge aufnehmbar ist, die einen längeren kontinuierlichen Betrieb ermöglicht.

Das die Vorrichtung verlassende Abwasser hat einen solchen Reinheitsgrad, daß es auch unbedenklich über Bord entleert werden kann. Die Vorrichtung baut sich in einfacher Weise aus Blechen, die zum Teil geflanscht sind und die durch Schweißen und Schrauben miteinander verbunden werden, auf.

Die einzelnen Aggregate zum Antrieb sind integrierte Einheiten, beispielsweise die Dosiervorrichtung oder die Rührturbine mit Antrieb, und lassen sich, falls erforderlich, leicht auswechseln und die ganze Vorrichtung ist dadurch äußerst wartungsfreundlich.

## Ansprüche

1. Vorrichtung zur Aufbereitung von verbrauchten Emulsionen und Industrieabwässern oder dgl. mit einem Reaktionsbehälter, in welchem die aufzubereitende Flüssigkeit und ein Trennmittel miteinander in Verbindung gebracht werden, einem Absetzbehälter, in welchem sich ein sich bildender Niederschlag absetzt sowie einer Einrichtung, mit der der Niederschlag aus dem Absetzbehälter ausgetragen wird, dadurch gekennzeichnet, daß die die Flüssigkeit aufnehmenden Behälter (33, 26) kastenförmige Gestalt haben mit geradem Boden, auf dem sich der sich bildende Niederschlag im Absetzbehälter (26) absetzt und über den ein Wabenband (13) läuft, das mit seinen äußeren Oberflächen zwischen sich gegenüberliegenden Seitenwänden (9, 14, bzw. 9, 22) und über den Boden (10) gleitet, und den Absetzbehälter (26) über Schlitze (23, 24) verläßt, die dem Querschnitt des Wabenbandes entsprechen und wobei das Wabenband auf seinem Weg über einen Sammelbehälter (3) hinwegläuft, der oberhalb der Behälter angebracht ist.

2. Vorrichtung nach Anspruch 1, dadurch gekennzeichnet, daß das Wabenband einen rechteckigen Weg durchläuft und zwei vertikale und zwei horizontale Trumms besitzt, wobei der Teil des Wabenbandes, der außerhalb des Absetzbehälters (26) liegt, durch einen brückenartigen Aufbau (2) verläuft, in den der Auffangbehälter (3) verfahrbar angeordnet ist.

3. Vorrichtung nach Anspruch 1 und 2, dadurch gekennzeichnet, daß der Reaktionsbehälter (33) und der Absetzbehälter (26) durch eine Platte (25) verschlossen sind, die die Schlitze (23, 24) enthält, welche in ihrer Querschnittsform der Querschnittsform des Wabenbandes (13) entsprechen.

4. Vorrichtung nach Anspruch 1 bis 3, dadurch gekennzeichnet, daß die vertikal verlaufenden Trumms (19, 20) des Wabenbandes (13) in Kanälen (15, 18) verlaufen, die zwischen den Seitenwänden (9) und zusätzlich eingebauten Wänden (14, 22) gebildet sind, wobei sich diese Seitenwände (9) und die zusätzlichen Wände (14, 22) in dem brückenartigen Aufbau (2) wenigstens zum Teil fortsetzen.

5. Vorrichtung nach Anspruch 1 bis 4, dadurch gekennzeichnet, daß der in den Brückenaufbau (2) hinein und heraus verfahrbare Sammelbehälter (3) in Schienen (30) läuft und am Ende seiner Auswärtsbewegung abkippbar ist (32).

6. Vorrichtung nach Anspruch 1 bis 5, dadurch gekennzeichnet, daß auf das obere horizontale, im Brückenaufbau (2) verlaufende Trumm des Wabenbandes (13) eine Klopfvorrichtung (27, 28) einwirkt.

7. Vorrichtung nach Anspruch 1 bis 6, dadurch gekennzeichnet, daß das Wabenband (13) vermittels einer Antriebswalze (17) mit Zahnkränzen (42) mit einem Elektromotor (38) mit Getriebe (39) regelbar angetrieben ist.

FIG.1

FIG.2

FIG.3

FIG.4

FIG.5

FIG.6

FIG.7